# EUROPEAN PATENT SPECIFICATION

(11) **EP 0 744 875 B1**
(45) Date of publication and mention of the grant of the patent: **18.09.2002**
(21) Application number: 96303594.4
(22) Date of filing: 21.05.1996
(51) Int. Cl.: H04Q 7/32

(54) **Subscriber number storing device and mobile station using the same**
Teilnehmerrufnummerspeicherungseinrichtung und Mobilstation dafür
Dispositif de stockage de numéro d'abonné et station mobile utilisant le dispositif

(30) Priority: 26.05.1995 JP 12845495
(43) Date of publication of application: 27.11.1996
(73) Proprietor: NTT DoCoMo, Inc., Tokyo 100-6150 (JP)
(72) Inventor: Tsukahara, Hiroshi, Tokorozawa-shi, Saitama 359 (JP); Nagata, Kiyohito, Yokohama-shi, Kanagawa 235 (JP); Yabusaki, Masami, Iruma-shi, Saitama 359 (JP)
(74) Representative: Beresford, Keith Denis Lewis

(56) References cited:
- EP-A- 0 048 868
- EP-A- 0 526 981
- WO-A-94/30023
- WO-A-95/07009
- DE-U- 9 108 309

## Description

The present invention relates to a mobile station used in a mobile communications system, and particularly to a subscriber number storing device and a mobile station using the same, to which a plurality of subscriber numbers can be assigned.

Conventionally, one mobile station is provided with only one subscriber number. Accordingly, it is impossible to use a mobile station appropriately to meet the various needs of a user. For example, a mobile station cannot be used separately for business purpose or private purpose. In such a case, a user must use two or more mobile stations to which different subscriber numbers are assigned.

German Gebrauchsmuster G 91 08 309.5, on the basis of which the claims appended hereto are cast in the two-part form, describes a mobile telecommunications system in which a mobile station is capable of receiving a user card in a selected one of a number of different orientations. Each orientation has a set of contacts on the card associated therewith, providing access for the mobile station to a subscriber number for use with a respective network. In that way, different networks can be catered for by the same user card.

It is therefore an object of one aspect of the present invention to provide a mobile station to which a plurality of subscriber numbers stored in an external storing device can be assigned.

An object of another aspect of the present invention is to provide a mobile station to which only a subscriber number or subscriber numbers are assigned which a user selects among a plurality of subscriber numbers stored in an external storing device.

An object of another aspect of the present invention is to provide a removable (that is, loadable on and unloadable from a mobile station) storing device for. storing one more subscriber numbers and/or mobile station numbers.

According to a first aspect of the invention there is provided a mobile station for use in a mobile communications system, said mobile station comprising:
internal storage means for storing one or more subscriber numbers assigned to one or more users of said mobile station;
number reading means for reading one or more subscriber numbers from a removable external storage device loaded on said mobile station in use;
writing means for writing one or more subscriber numbers read by said number reading means into said internal storage means; and
registering means for registering each subscriber number read by said number reading means with a mobile station number -assigned to said mobile station on a network of said mobile communications system,
characterised in that said number reading means comprises number inhibition flag reading means for reading, for a subscriber number read by said number reading means, a flag indicating whether said subscriber. number is available for use with a particular communication service or not, said registering means being operable to register a subscriber number only if said number inhibition flag reading means reads a flag for said subscriber number indicating that said subscriber number is available for use with said particular communication service.

According to a second aspect of the invention there is provided an external storage device for use with a mobile station according to the first aspect of the invention in a mobile communications system, said external storage device comprising:
subscriber number storage means for storing one or more subscriber numbers assigned to one or more users of said mobile station; and
characterised by:
number inhibition flag storage means for storing, in respect of each subscriber number stored in said subscriber number storage means, an inhibition flag indicating whether or not a stored subscriber number is available for use with a particular communications service or not.

According to a third aspect of the invention there is provided a method of introducing a subscriber number onto a mobile station operable for use with more than one subscriber number assigned to one or more users of said mobile station in a mobile communications system, comprising the steps of:
receiving a storage medium into a mobile station, said storage medium storing one or more subscriber numbers and corresponding number inhibition flags;
reading said one or more subscriber numbers;
checking for each of said one or more subscriber number, whether said number is inhibited for use with a particular communications service by its corresponding inhibition flag;
for each of said one or more subscriber number not inhibited by its inhibition flag storing said number on said mobile station; and
registering said number stored on said mobile station with a mobile station number assigned to said mobile station on said mobile communications system.

Embodiments of the present invention will now be described with reference to the accompanying drawings, in which:
Fig. 1 is a block diagram showing a first embodiment of a mobile station in accordance with the present invention;
Figs. 2A and 2B are schematic diagrams illustrating a format of a plurality of subscriber numbers.stored in an external storing device;
Fig. 3 is a flowchart showing the operation for setting subscriber numbers in the mobile station in the first embodiment;
Fig. 4 is a flowchart showing a call connection procedure in the first embodiment;
Fig. 5 is a flowchart showing the operation for selecting subscriber numbers to be set in the mobile station in the first embodiment;
Fig. 6 is a flowchart showing a calling procedure in the first embodiment;
Fig. 7 is a schematic diagram illustrating a format of a plurality of mobile station numbers stored in an external storing device of a second embodiment of a mobile station in accordance with the present invention;
Fig. 8 is a flowchart showing the operation for setting mobile station numbers and subscriber numbers in a mobile station in the second embodiment; and
Fig. 9 is a schematic diagram illustrating a method for applying the plurality of mobile station numbers in the second embodiment.

The invention will now be described with reference to the accompanying drawings.

### EMBODIMENT 1

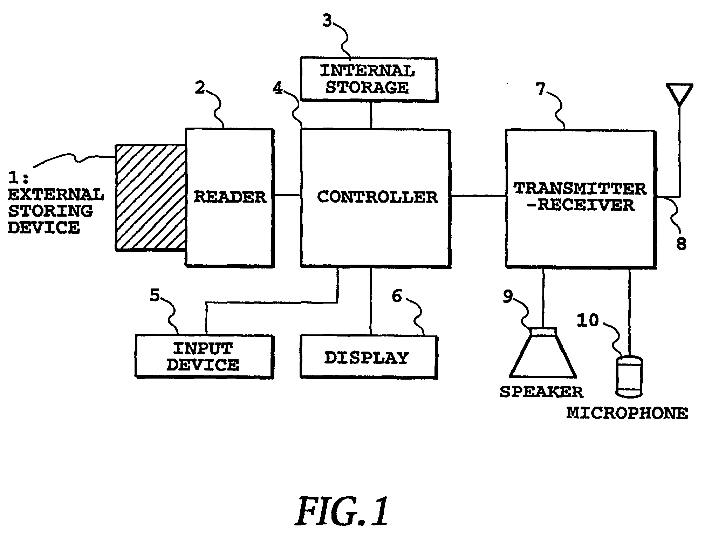

Fig. 1 is a block diagram showing a first embodiment of a mobile station in accordance with the present invention. In Fig. 1, the reference numeral 1 designates an external storing device (called storing device below for short) consisting of an IC usually in the shape of a card. The reference numeral 2 designates a reader for reading the contents of the storing device 1. The reference numeral 3 designates an internal storage (called storage below for short) capable of holding the stored data even if the power supply is turned off. The reference numeral 4 designates a controller including a CPU or the like for controlling the mobile station. The reference numeral 5 designates an input device comprising push buttons and the like for inputting telephone numbers and other data. The reference numeral 6 designates a display including liquid crystals or the like, for displaying the input telephone numbers, or messages of the mobile station. The reference numeral 7 designates a transmitter-receiver for carrying out radio communications with a base station through an antenna 8 under the control of the controller 4. The reference numerals 9 and 10 designate a speaker and a microphone, respectively, with which telephone conversations are made.

The subscriber number storing device 1 is inserted into the reader 2 of the mobile station. The mobile station, under the control of the controller 4, reads a plurality of subscriber numbers, and mobile station numbers if any, stored in the subscriber number storing device 1, and stores them in the storage 3. The subscriber numbers and the mobile station numbers stored in the storage 3 is held even after the power supply is turned off.

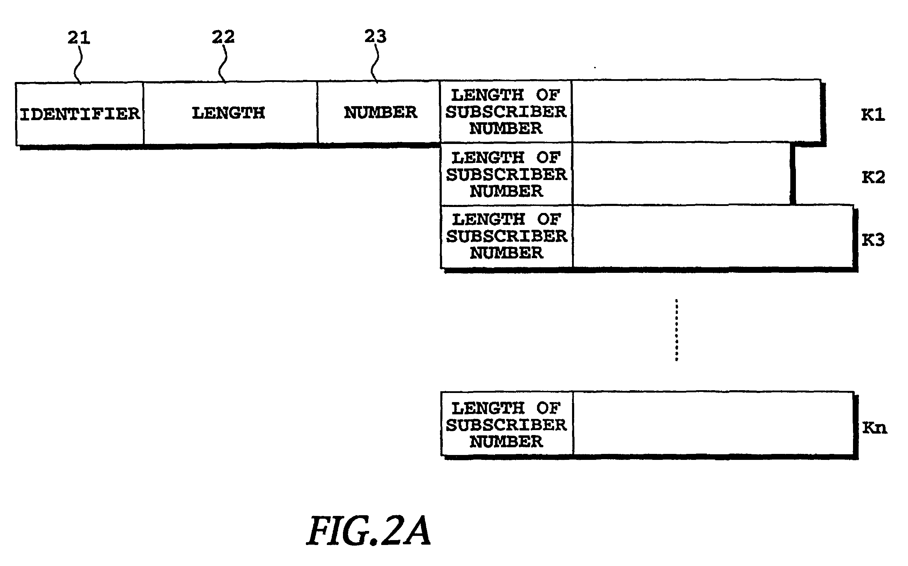

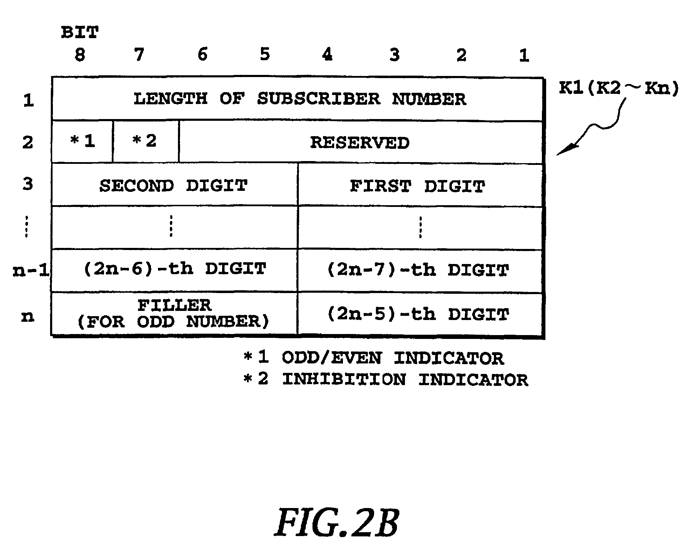

Figs. 2A and 2B shows an example of a format of the subscriber numbers stored in the subscriber number storing device 1. Fig. 2A show the entire arrangement. The reference numeral 21 designates an identifier which indicates that the data is the subscriber numbers. The reference numerals 22 and 23 designate data length and the number of the stored subscriber numbers, respectively. Fig. 2B shows an arrangement of each of the subscriber numbers K₁ - Kₙ. Each digit of the subscriber number consists of a 4-bit BCD. The data length of the subscriber number is stored in the first byte. The second bit of the second byte is used as a flag indicating whether the subscriber number is inhibited or not.

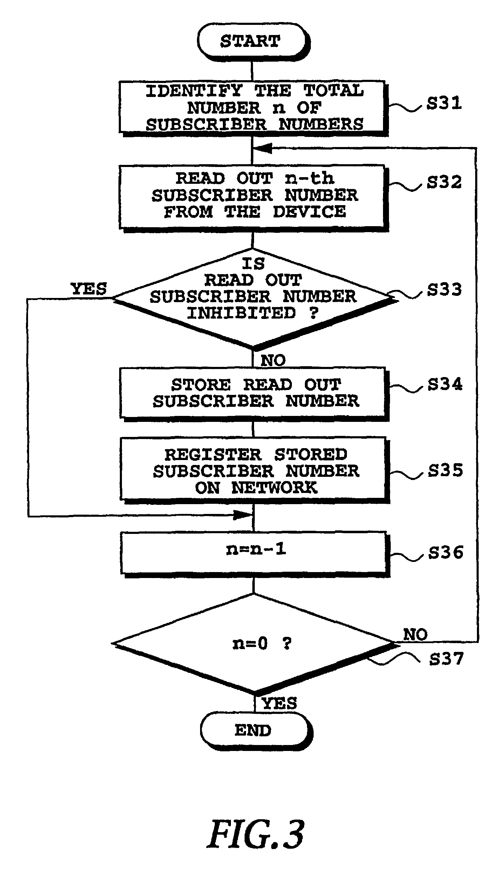

Fig. 3 is a flowchart showing a procedure for reading the subscriber numbers stored in the subscriber number storing device 1, which is carried out under the control of the controller 4.

First, the total number is read of the subscriber numbers stored in the subscriber number storing device 1 at step S31. Then, one of the subscriber numbers is read from the storing device 1 at step S32, and the inhibition flag of the read subscriber number is checked at step S33. If the subscriber number is inhibited, the next subscriber number is read through steps S36, S37 and S32. Otherwise, the read subscriber number is stored in the storage 3 of the mobile station at step S34. The mobile station registers through a transmitter-receiver 7 the read subscriber number on the network together with a mobile station number preassigned to the mobile station, thereby making the subscriber number effective at step S35. The procedure is continued until the entire subscriber numbers are read out of the storing device 1 through steps S36 and S37.

One of the plurality of subscriber numbers stored in the mobile station can be selected when making a telephone call. In addition, any of these subscriber numbers can be call-connected, in which case, the called subscriber number is shown on the display 6.

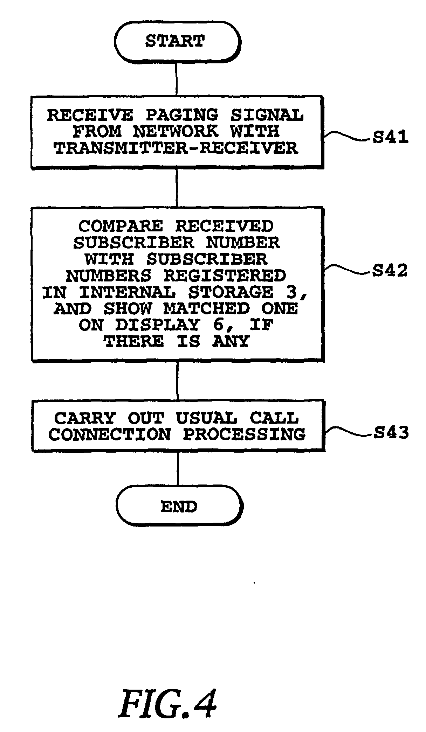

Fig. 4 is a flowchart showing the operation of a call connection to the mobile station to which a plurality of subscriber numbers are assigned. When the transmitter-receiver 7 receives a paging (calling) signal from the network at step S41, the controller 4 compares the received subscriber number with the subscriber numbers stored in the storage 3, and if the same subscriber number is found, the controller 4 puts the subscriber number on the display 6 at step 42. Subsequently, the mobile station beeps, followed by the usual call connection operation at step S43. By thus displaying the called subscriber number, the person using that subscriber number can directly answer the telephone call.

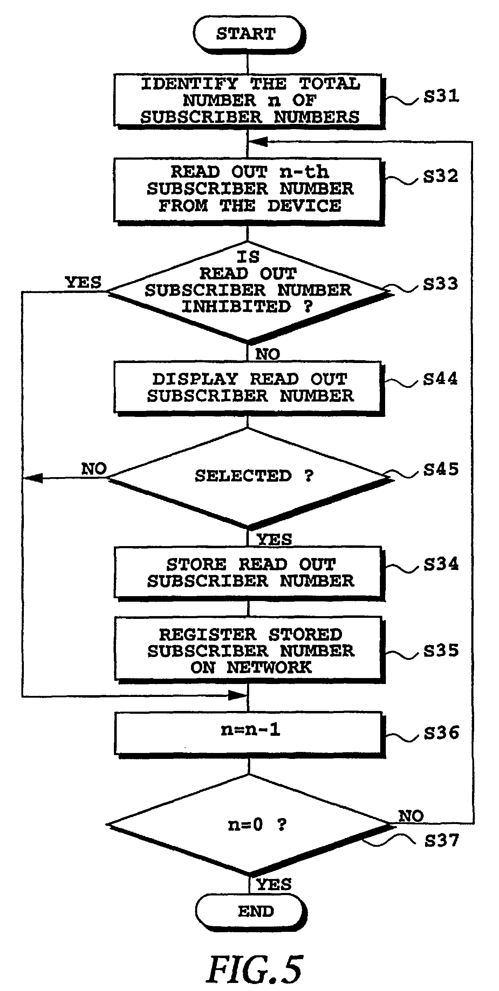

Fig. 5 is a flowchart showing the procedure, in which a user can select any subscriber numbers to be registered among the subscriber numbers read from the storing device 1.

The flowchart of Fig. 5 differs from that of Fig. 3 in the following. First, the subscriber number read out of the subscriber number storing device 1 is put on the display 6 of the mobile station at step S44, and second, the user watches the displayed subscriber number, and decides whether to select it or not with the input device 5 at step S45. The other steps are similar to those of Fig. 3. Thus, the user can select and use only the desired subscriber numbers by registering them on the network.

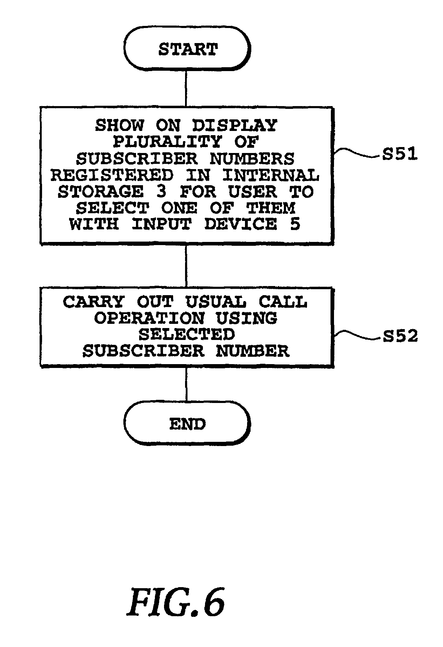

Fig. 6 is a flowchart showing the operation of a telephone call from the mobile station to which a plurality of subscriber numbers are assigned. The sender has the plurality of subscriber numbers in the storage 3 shown on the display 6 to select one of them using the input device 5 at step S51. This allows the mobile station to carry out a usual telephone call at step S52 using the subscriber number selected by the user. Thus selecting the subscriber number before calling enables the user to appropriately use the subscriber numbers in accordance with the types of calling such as business use or private use.

As described above, assigning a plurality of subscriber numbers to a single mobile station can improve the convenience of a user in the following.
(1) The mobile station can be used appropriately in accordance with the needs of the user in such operation as assigning one subscriber number to business use and another subscriber number to private use.
(2) A called person can directly answer a telephone call by assigning a subscriber number to each person, and displaying the subscriber number of the telephone call.
(3) The mobile station can separately handle a telephone call and a facsimile call by assigning one subscriber number to the telephone and another subscriber number to the facsimile.

Although a plurality of subscriber numbers are assigned to one mobile station in the first embodiment, it is possible to assign a plurality of mobile station numbers to one mobile station. A second embodiment is an example of this.

### EMBODIMENT 2

A second embodiment differs from the first embodiment in that the storing device 1 stores a plurality of mobile station numbers.

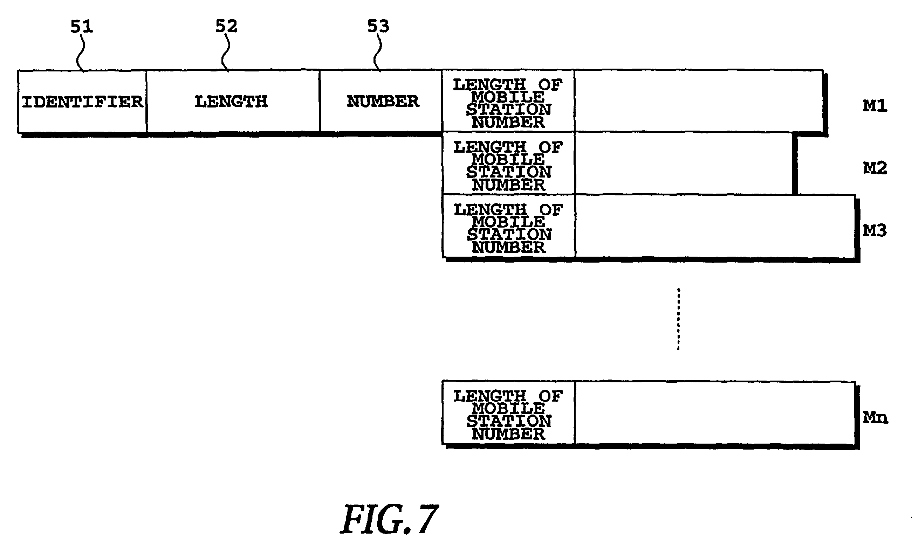

Fig. 7 shows an example of a format of mobile station numbers stored in the storing device 1. In Fig. 7, the reference numeral 51 designates an identifier indicating that the data are mobile station numbers. The reference numeral 52 designates the data length of the entire mobile station numbers, and 53 denotes the total number of the mobile station numbers. The total number is identical to that of the subscriber numbers. The reference characters M₁ - Mₙ designate the mobile station numbers which are represented by 4-bit BCDs. The length of each mobile station number is placed at its initial position.

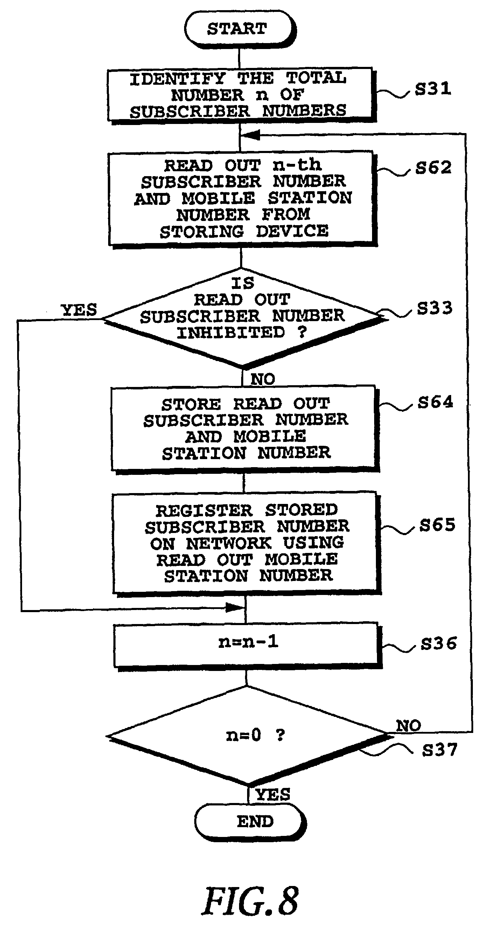

Fig. 8 is a flowchart showing the procedure for reading the subscriber numbers and mobile station numbers stored in the storing device 1.

In this processing, the controller 4 controls the reader 2 to read a subscriber number and the corresponding mobile station number from the storing device 1 at step S62. Then, the controller 4 stores those read numbers in the storage 3 in the mobile station at step S64. Subsequently, the controller 4 registers through the transmitter-receiver 7 the corresponding mobile station number and the subscriber number on the network, thereby making the subscriber number effective at step S65. The other steps of the procedure are similar to those of the flowchart of Fig. 3. By thus assigning a plurality of mobile station numbers to a single mobile station, the network considers the mobile station as a plurality of mobile stations.

An advantage will be described when a plurality of mobile station numbers are assigned to a single mobile station.

A mobile station number is originally assigned for managing the mobile station. For example, when the mobile station is stolen or lost, the network annuls its mobile station number to prevent the abuse of the mobile station. Thus, the mobile station number differs from the subscriber number in that it is a hidden number, known only by the network.

Today, as an increasing types of telephone services are offered, the contents and fees of the services are also diversified. In such an environment, there are some cases where it is desirable that only limited persons can receive some kinds of services. We can make use of a plurality of mobile station numbers assigned to a single mobile station in such a case.

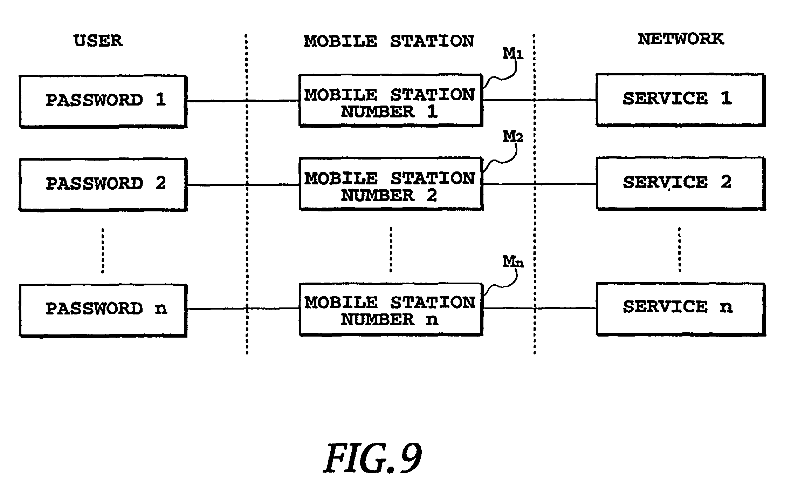

Fig. 9 shows that kind of application. Each mobile station number is connected with a particular service, and is registered on the network. At the same time, a user has registered a password corresponding to each mobile station number in advance. When the password is input to the mobile station from the input device 5, the controller 4 accesses the network using the mobile station number corresponding to the password. Thus, the network provides the mobile station with the service assigned to the mobile station number.

In this way, it becomes possible not only to use the mobile station as a multi-service mobile station, but also to allow a limited user to select particular ones from various services on a menu, and enjoy them.

Although the total number of the mobile station numbers are assumed to be equal to that of the subscriber numbers in the second embodiment, it is not limited to this. Any number of subscriber numbers can be combined with a plurality of mobile station numbers. In addition, it is possible to set one or more mobile station numbers in the mobile station in advance.

To sum up, we can make use of the following combinations of the subscriber numbers and the mobile station numbers.
1. The combinations of a plurality of subscriber numbers stored in the storing device 1 with the following mobile station number(s).
   (1) One mobile station number preregistered in the mobile station.
   (2) A plurality of mobile station numbers preregistered in the mobile station.
   (3) One mobile station number stored in the storing device 1.
   (4) A plurality of mobile station numbers stored in the storing device 1.
2. The combinations of one subscriber number stored in the storing device 1 with the following mobile station numbers.
   (1) A plurality of mobile station numbers preregistered in the mobile station.
   (2) One mobile station number stored in the storing device 1.
   (3) A plurality of mobile station numbers stored in the storing device 1.

In this embodiment also, as in the processing shown in Fig. 5, any subscriber numbers can be selected to be registered.

The inhibition flag is not essential in the foregoing processings. In this case, the steps for handling the flag are obviated.

The storing device 1 consists of an IC, which is provided with access protection so that the subscriber numbers and mobile station numbers stored therein cannot be read out easily. For this purpose, these data may be encrypted to be stored, or more complex access control can be provided by using one-chip microcomputer.

The present invention has been described in detail with respect to various embodiments, and it will now be apparent from the foregoing to those skilled in the art that changes and modifications may be made without departing from the invention in its broader aspects, and it is the intention, therefore, in the appended claims to cover all such changes and modifications as fall within the scope of the invention.

## Claims

1. A mobile station for use in a mobile communications system, said mobile station comprising:
internal storage means (3) for storing one or more subscriber numbers assigned to one or more users of said mobile station;
number reading means (2) for reading one or more subscriber numbers from a removable external storage device (1) loaded on said mobile station in use;
writing means (4) for writing one or more subscriber numbers read by said number reading means (2) into said internal storage means; and
registering means (4, 7, 8) for registering each subscriber number read by said number reading means (2) with a mobile station number assigned to said mobile station on a network of said mobile communications system,
**characterised in that** said number reading means (2) comprises number inhibition flag reading means for reading, for a subscriber number read by said number reading means, a flag indicating whether said subscriber number is available for use with a particular communication service or not, said registering means (4, 7, 8) being operable to register a subscriber number only if said number inhibition flag reading means reads a flag for said subscriber number indicating that said subscriber number is available for use with said particular communication service.

2. The mobile station as claimed in claim 1 further comprising:
a display (6) for displaying said available subscriber numbers; and
input receiving means (5) for receiving a user selection of one or more desired subscriber numbers among said available subscriber numbers shown in said display (6),
said registering means (4, 7, 8) being operable to register only those subscriber numbers selected at said input receiving means (5).

3. The mobile station as claimed in claim 1 wherein said mobile station comprises mobile station number storage means for storing one or more mobile station numbers in advance, and said registering means (4, 7, 8) is operable to register each of said available subscriber numbers with one of said mobile station numbers stored in said mobile station number storage means, in use.

4. The mobile station as claimed in claim 1 wherein said number reading means (2) comprises mobile station number reading means for reading mobile station numbers stored in an external storage device (1) in use, and said registering means (4, 7, 8) is operable to register each available subscriber number with one of said mobile station numbers read from said external storage device (1) in use.

5. The mobile station as claimed in claim 3 or 4 wherein each of said mobile station numbers corresponds with a different communications service.

6. An external storage device (1) for use with a mobile station according to claim 1 in a mobile communications system, said external storage device comprising:
subscriber number storage means for storing one or more subscriber numbers assigned to one or more users of said mobile station; and
**characterised by**:
number inhibition flag storage means for storing, in respect of each subscriber number stored in said subscriber number storage means, an inhibition flag indicating whether or not a stored subscriber number is available for use with a particular communications service or not.

7. The external storage device (1) as claimed in claim 6 further comprising mobile station number storage means for storing one or more mobile station numbers assigned to one or more mobile stations.

8. The external storage device (1) as claimed in claim 6 further comprising access protection means for protecting data of said external storage device (1).

9. The external storage device as claimed in any of claims 6 to 8 installed into a mobile station in accordance with any of claims 1 to 5.

10. A method of introducing a subscriber number onto a mobile station operable for use with more than one subscriber number assigned to one or more users of said mobile station in a mobile communications system, comprising the steps of:
receiving a storage medium into a mobile station, said storage medium storing one or more subscriber numbers and corresponding number inhibition flags;
reading (S32) said one or more subscriber numbers;
checking (S33) for each of said one or more subscriber number, whether said number is inhibited for use with a particular communications service by its corresponding inhibition flag;
for each of said one or more subscriber number not inhibited by its inhibition flag storing (S34) said number on said mobile station; and
registering (S35) said number stored on said mobile station with a mobile station number assigned to said mobile station on said mobile communications system.

## Patentansprüche

1. Mobilstation zur Verwendung in einem Mobilkommunikationssystem, wobei die Mobilstation versehen ist mit:
einer internen Speichereinrichtung (3) zur Speicherung einer oder mehrerer Teilnehmernummern, die einem oder mehreren Benutzern der Mobilstation zugewiesen sind;
einer Nummernleseeinrichtung (2) zum Lesen einer oder mehrerer Teilnehmernummern aus einer abnehmbaren externen Speichervorrichtung (1), die bei der in Betrieb befindlichen Mobilstation installiert ist;
einer Schreibeinrichtung (4) zum Schreiben einer oder mehrerer durch die Nummernleseeinrichtung (2) gelesener Teilnehmernummern in die interne Speichereinrichtung; und
einer Registriereinrichtung (4, 7, 8) zur Registrierung jeder durch die Nummernleseeinrichtung (2) gelesenen Teilnehmernummer mit einer der Mobilstation zugewiesenen Mobilstationsnummer bei einem Netzwerk des Mobilkommunikationssystems,
**dadurch gekennzeichnet, dass**
die Nummernleseeinrichtung (2) eine Nummernsperrzustandsmerkerleseeinrichtung aufweist, um für eine durch die Nummernleseeinrichtung gelesene Teilnehmernummer einen Zustandsmerker zu lesen, der anzeigt, ob die Teilnehmernummer zur Verwendung mit einem speziellen Kommunikationsdienst verfügbar ist oder nicht, wobei die Registriereinrichtung (4, 7, 8) betreibbar ist, um eine Teilnehmernummer nur zu registrieren, wenn die Nummernsperrzustandsmerkerleseeinrichtung einen Zustandsmerker für die Teilnehmernummer liest, der anzeigt, dass die Teilnehmernummer zur Verwendung mit dem speziellen Kommunikationsdienst verfügbar ist.

2. Mobilstation nach Anspruch 1, zudem mit:
einer Anzeige (6) zum Anzeigen der verfügbaren Teilnehmernummern; und
einer Eingabeempfangseinrichtung (5) zum Empfangen einer Benutzerauswahl einer oder mehrerer gewünschter Teilnehmernummern aus den verfügbaren Teilnehmernummern, die in der Anzeige (6) gezeigt sind,
wobei die Registriereinrichtung (4, 7, 8) betreibbar ist, um nur jene bei der Eingabeempfangseinrichtung (5) ausgewählten Teilnehmernummer zu registrieren.

3. Mobilstation nach Anspruch 1, wobei
die Mobilstation eine Mobilstationsnummernspeichereinrichtung zum vorab erfolgenden Speichern einer oder mehrerer Mobilstationsnummern aufweist, und die Registriereinrichtung (4, 7, 8) betreibbar ist, um jede der verfügbaren Teilnehmernummern mit einer der in der verwendeten Mobilstationsnummernspeichereinrichtung gespeicherten Mobilstationsnummern zu registrieren.

4. Mobilstation nach Anspruch 1, wobei
die Nummernleseeinrichtung (2) eine Mobilstationsnummernlesereinrichtung zum Lesen von in einer verwendeten externen Speichervorrichtung (1) gespeicherten Mobilstationsnummern aufweist, und die Registriereinrichtung (4, 7, 8) betreibbar ist, um jede verfügbare Teilnehmernummer mit einer der aus der verwendeten externen Speichervorrichtung (1) gelesenen Mobilstationsnummern zu registrieren.

5. Mobilstation nach Anspruch 3 oder 4, wobei
jede der Mobilstationsnummern einem unterschiedlichen Kommunikationsdienst entspricht.

6. Externe Speichervorrichtung (1) zur Verwendung mit einer Mobilstation gemäß Anspruch 1 in einem Mobilkommunikationssystem, wobei die externe Speichervorrichtung aufweist:
eine Teilnehmernummernspeichereinrichtung zur Speicherung einer oder mehrerer Teilnehmernummern, die einem oder mehreren Benutzern der Mobilstation zugewiesen sind; und **gekennzeichnet durch**:
eine Nummernsperrzustandsmerkerspeichereinrichtung zur Speicherung, in Bezug auf jede in der Teilnehmernummernspeichereinrichtung gespeicherte Teilnehmernummer, eines Sperrzustandsmerkers, der anzeigt, ob eine gespeicherte Teilnehmernummer zur Verwendung mit einem speziellen Kommunikationsdienst verfügbar ist oder nicht.

7. Externe Speichervorrichtung (1) nach Anspruch 6,
zudem mit einer Mobilstationsnummernspeichereinrichtung zur Speicherung einer oder mehrerer Mobilstationsnummern, die einer oder mehreren Mobilstationen zugewiesen sind.

8. Externe Speichervorrichtung (1) nach Anspruch 6,
zudem mit einer Zugriffsschutzeinrichtung zum Schützen von Daten der externen Speichervorrichtung (1).

9. Externe Speichervorrichtung nach einem der Ansprüche 6 bis 8, die bei einer Mobilstation gemäß einem der Ansprüche 1 bis 5 installiert ist.

10. Verfahren zum Einführen einer Teilnehmernummer bei einer Mobilstation, die zur Verwendung mit mehr als einer Teilnehmernummer betreibbar ist, die einem oder mehreren Benutzern der Mobilstation in einem Mobilkommunikationssystem zugewiesen ist, mit den Schritten:
Empfangen eines Speichermediums bei einer Mobilstation, wobei das Speichermedium eine oder mehrere Teilnehmernummern und entsprechende Nummernsperrzustandsmerker speichert;
Lesen (S32) der einen oder mehreren Teilnehmernummern;
Überprüfen (S33) für jede der einen oder mehreren Teilnehmernummern, ob die Nummer zur Verwendung mit einem speziellen Kommunikationsdienst durch ihren entsprechenden Sperrzustandsmerker gesperrt ist;
für jede der einen oder mehreren Teilnehmernummern, die nicht durch ihren Sperrzustandsmerker gesperrt ist, Speichern (S34) der Nummer in der Mobilstation; und
Registrieren (S35) der in der Mobilstation gespeicherten Nummer mit einer der Mobilstation zugewiesenen Mobilstationsnummer bei dem Mobilkommunikationssystem.

## Revendications

1. Poste mobile à utiliser dans un système de communications mobiles, le poste mobile comportant
des moyens (3) de mémorisation interne destinés à mémoriser un ou plusieurs numéros d'abonnés affectés à un ou plusieurs utilisateurs du poste mobile ;
des moyens (2) de lecture de numéros destinés à lire un ou plusieurs numéros d'abonnés à partir d'un dispositif (1) de mémorisation externe amovible chargé sur le poste mobile en cours d'utilisation ;
des moyens (4) d'écriture destinés à écrire un ou plusieurs numéros d'abonnés lus par les moyens (2) de lecture de numéros dans les moyens de mémorisation interne ; et
des moyens (4, 7, 8) de marquage destinés à marquer chaque numéro d'abonné lu par les moyens (2) de lecture de numéros avec un numéro de poste mobile affecté au poste mobile sur un réseau du système de communications mobiles,
**caractérisé en ce que** les moyens (2) de lecture de numéros comportent des moyens de lecture d'indicateur d'inhibition de numéros destinés à lire, pour un numéro d'abonné lu par les moyens de lecture de numéros, un indicateur indiquant si le numéro d'abonné est disponible à l'utilisation avec un service de communication particulier ou pas, les moyens (4, 7, 8) de marquage pouvant fonctionner pour marquer un numéro d'abonné uniquement si les moyens de lecture d'indicateur d'inhibition de numéros lisent un indicateur pour le numéro d'abonné indiquant que le numéro d'abonné est disponible à l'utilisation avec le service de communication particulier.

2. Poste mobile suivant la revendication 1, comportant en outre:
un dispositif (6) d'affichage destiné à afficher les numéros d'abonnés disponibles ; et
des moyens (5) de réception d'entrée destinés à recevoir une sélection d'utilisateur de un ou plusieurs numéros d'abonnés souhaités parmi les numéros d'abonnés disponibles représentés dans le dispositif (6) d'affichage,
les moyens (4, 7, 8) de marquage pouvant fonctionner pour marquer uniquement les numéros d'abonnés sélectionnés aux moyens (5) de réception d'entrée.

3. Poste mobile suivant la revendication 1, dans lequel le poste mobile comporte des moyens de mémorisation de numéros de postes mobiles destinés à mémoriser un ou plusieurs numéros de postes mobiles à l'avance, et les moyens (4, 7, 8) de marquage peuvent fonctionner pour marquer chacun des numéros d'abonnés disponibles avec l'un des numéros de postes mobiles mémorisés dans les moyens de mémorisation de numéros de postes mobiles, en utilisation.

4. Poste mobile suivant la revendication 1, dans lequel les moyens (2) de lecture de numéros comportent des moyens de lecture de numéros de postes mobiles destinés à lire des numéros de postes mobiles mémorisés dans un dispositif (1) de mémorisation externe en utilisation, et les moyens (4, 7, 8) de marquage peuvent fonctionner pour marquer chaque numéro d'abonné disponible avec l'un des numéros de postes mobiles lu du dispositif (1) de mémorisation externe en utilisation.

5. Poste mobile suivant la revendication 3 ou 4, dans lequel chacun des numéros de postes mobiles correspond à un service de communication différent.

6. Dispositif (1) de mémorisation externe à utiliser avec un poste mobile conforme à la revendication 1 dans un système de communications mobiles, le dispositif de mémorisation externe comportant:
des moyens de mémorisation de numéros d'abonnés destinés à mémoriser un ou plusieurs numéros d'abonnés affectés à un ou plusieurs utilisateurs du poste mobile ; et
**caractérisé par**:
des moyens de mémorisation d'indicateur d'inhibition de numéros destinés à mémoriser, en ce qui concerne chaque numéro d'abonné mémorisé dans les moyens de mémorisation de numéros d'abonnés, un indicateur d'inhibition indiquant si oui ou non un numéro d'abonné mémorisé est disponible à l'utilisation avec un service de communication particulier.

7. Dispositif (1) de mémorisation externe tel que revendiqué à la revendication 6, comportant en outre des moyens de mémorisation de numéros de postes mobiles destinés à mémoriser un ou plusieurs numéros de postes mobiles affectés à un plusieurs postes mobiles.

8. Dispositif (1) de mémorisation externe suivant la revendication 6, comportant en outre des moyens de protection d'accès destinés à protéger des données du dispositif (1) de mémorisation externe.

9. Dispositif de mémorisation externe-suivant l'une quelconque des revendications 6 à 8, installé dans un poste mobile suivant l'une quelconque des revendications 1 à 5.

10. Procédé d'introduction d'un numéro d'abonné sur un poste mobile pouvant fonctionner à l'utilisation avec plus qu'un numéro d'abonné affecté à un ou plusieurs utilisateurs du poste mobile dans un système de communications mobiles, qui comporte les étapes qui consistent à:
recevoir un support de mémorisation dans un poste mobile, le support de mémorisation mémorisant un ou plusieurs numéros d'abonnés et des indicateurs d'inhibition de numéros correspondants ;
lire (S32) lesdits un ou plusieurs numéros d'abonnés ;
vérifier (S33) pour chacun desdits un ou plusieurs numéros d'abonnés, si le numéro est inhibé à l'utilisation avec un service de communication particulier par son indicateur d'inhibition correspondant ;
pour chacun desdits un ou plusieurs numéros d'abonnés qui ne sont pas inhibés par leur indicateur d'inhibition, mémoriser (S34) le numéro sur le poste mobile ; et
marquer (S35) le numéro mémorisé sur le poste mobile avec un numéro de poste mobile affecté au poste mobile sur le système de communications mobiles.
